# EUROPEAN PATENT APPLICATION

(11) **EP 2 998 534 A2**
(43) Date of publication of application: **23.03.2016**
(21) Application number: 15184990.8
(22) Date of filing: 14.09.2015
(51) Int. Cl.: F01N 3/28, F01N 3/20, F01N 13/00

(54) **DIESEL EXHAUST MIXING CHAMBER**

(30) Priority: 15.09.2014 US 201414486217
(71) Applicant: Paccar Inc, Bellevue, WA 98004 (US)
(72) Inventor: GOFFE, Randal A., Everett, WA Washington 98208 (US)
(74) Representative: Gevers Patents

(57) **Abstract**

A mixing chamber is used for treatment of diesel exhaust. The mixing chamber includes a mixing pipe that permits passage of diesel exhaust, an insertion pipe that inserts the diesel exhaust into the mixing pipe near the first end of the mixing pipe such that the diesel exhaust entering the mixing pipe has angular momentum with respect to a longitudinal axis of the mixing pipe, and a mixer that introduces gaseous ammonia into the diesel exhaust with the atomized diesel exhaust fluid (DEF). The mixing pipe includes a DEF doser that injects the atomized DEF into the diesel exhaust. The mixing pipe has a larger cross section than the insertion pipe. The insertion pipe guides the diesel exhaust into the mixing pipe before the location of the DEF doser.

## Description

### BACKGROUND

Regulatory air-pollution limits for diesel engines have caused some manufacturers to adopt selective catalytic reduction (SCR) technology for reducing nitrogen oxides (NOx) in engine exhaust. The SCR process introduces a diesel exhaust fluid (DEF), such as an NOx reducing compound (e.g., a urea-water solution), into the hot exhaust gas. The DEF chemically reduces pollutant compounds, such as NOx, into non-pollutant compounds in conjunction with a catalyst. However, during typical operation of an engine, the conditions for the SCR process are not optimal. For example, the temperature of the exhaust is not optimal (i.e., either too hot or too cold) or the amount of DEF introduced to the exhaust is not optimal (i.e., either too much or too little DEF is introduced into the exhaust). When DEF is introduced that does not undergo the SCR process (e.g., too much DEF for the exhaust temperature), DEF crystals will accumulate within the exhaust system, both on the interior surface of the exhaust pipe and at the port that introduces the solution into the exhaust. Buildup of DEF crystals in the exhaust system detrimentally affects the performance of the exhaust system, and also is indicative of inefficiency in the SCR process: DEF crystals represent both wasted DEF solution and reduced SCR efficiency.

During injection of DEF into the diesel exhaust stream during SCR there is a significant amount of the total DEF injected that contacts the walls of the exhaust pipe and becomes a liquid wall film. While this process occurs, the DEF that is wetting the pipe walls does not reach the catalyst for its intended use and the intended quantity of reactant is not available in the catalyst. In order to provide the minimum required DEF amount, during normal engine operation, the DEF injector cycles on and off. While in operation, the aqueous DEF solution is injected as a stream of small droplets. Effective management of these droplets requires injector geometries specifically intended to transport the droplets away from the injector and into the main pipe flow with minimal wall wetting.

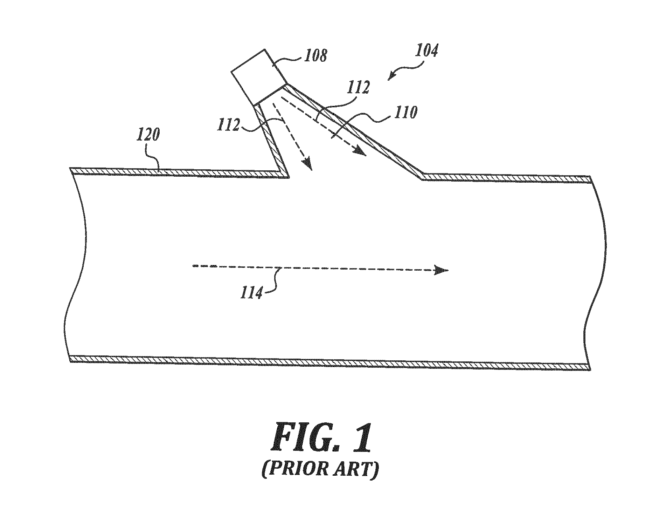

Known methods for reducing wall wetting during DEF injection include utilizing a DEF "doser port" having a DEF injector and a chamber that opens at the side of the main exhaust pipe, such as DEF dosers manufactured by Bosch. A diagrammatic illustration of an exemplary prior art doser port 104 is illustrated in FIGURE 1, wherein the doser port 104 comprises a DEF doser 108 and a chamber 110 shaped to provide passage for injected DEF 112 into an exhaust pipe 120. However, such DEF doser designs do not eliminate the wall-wetting effect.

For example, the main exhaust gas flow 114 causes the gas in the doser port 104 to move at high velocities. In turn, these high gas velocities push the DEF (e.g., urea) droplets into the walls that define the chamber 110. A droplet that sticks to the wall forms a liquid film. Under certain temperature conditions, the wall film will then form undesirable DEF crystals.

Efficient use of an engine after-treatment system (EAS) is predicated upon optimal atomization of DEF and efficient mixing of the atomized DEF droplets with diesel engine exhaust. The efficiency of mixing achieved between NH₃ from the DEF, at the point where the resultant mass flow arrives at the entrance of the SCR, is defined as the uniformity index. A mass flow distribution index and an NH₃ uniformity index of unity equates to 100% mixing efficiency. The goal when developing an EAS is to obtain both a mass flow index and an NH₃ uniformity index as close to 100% as possible.

Factors that impact mass flow distribution index and NH₃ uniformity index are: the distance from the DEF doser to the entrance of an SCR component, the residence time of the exhaust mass flow from the DEF doser to the entrance of an SCR component, and temperature, which can impact a number of thermally-driven chemical reactions during the residence time of the exhaust mass flow. Market forces demand that EASs be increasingly more compact to achieve energy savings by reducing space and weight. As EASs become more compact, achieving efficient mixing becomes more difficult. In addition, there are major cost savings to be gained by decreasing the number of different sizes of EAS sizes and configurations used globally by diesel truck manufacturers. This will effectively streamline product offering and decrease tooling changes. DEF wall deposit, while a long-standing problem, is exacerbated by reducing the size of EASs because the distance between the DEF doser and the SCR component is reduced.

So as to at least reduce the above-described inefficiencies with regard to DEF injection during an SCR process, a system not heretofore developed is needed, among others, to facilitate injection of liquid DEF solution into an exhaust system while increasing residence time of the exhaust mass flow and reducing wall deposit effects and remaining compact enough to meet market demands.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In one embodiment, a mixing chamber for treating diesel exhaust can include a mixing pipe, one or more insertion pipes coupled to the mixing pipe, and a mixer coupled to the mixing pipe. The mixing pipe can be configured to permit passage of diesel exhaust from a first end of the mixing pipe to a second end of the mixing pipe. The mixing pipe can include a DEF doser configured to inject atomized DEF into the diesel exhaust flowing from the first end to the second end. The one or more insertion pipes can be configured to insert the diesel exhaust into the mixing pipe near the first end of the mixing pipe such that the diesel exhaust entering the mixing pipe has angular momentum with respect to a longitudinal axis of the mixing pipe. A cross section of the mixing pipe perpendicular to the longitudinal axis of the mixing pipe can be larger than a cross section of the one or more insertion pipes perpendicular to an axis of the one or more insertion pipes such that pressure in the diesel exhaust drops as the diesel exhaust passes from the one or more insertion pipes into the mixing pipe. The mixer can be coupled to the second end of the mixing pipe and be configured to convert the atomized DEF into gaseous ammonia and to introduce the gaseous ammonia into the diesel exhaust.

In one example, the DEF doser is located near the longitudinal axis of the mixing pipe between the first end and the second end such that the diesel exhaust is inserted from the one or more insertion pipes into the mixing pipe before the location of the DEF doser. In another example, the mixing chamber can include static turbine blades located around the DEF doser. The DEF doser can be coupled to a portion of the first end mixing pipe that is indented toward the second end of the mixing pipe, and the diesel exhaust can be inserted from the one or more insertion pipes into the mixing chamber at a portion of the first end of the mixing pipe that is not indented. The mixing chamber can include a DEF supply line that passes through the portion of the first end mixing pipe that is indented toward the second end of the mixing pipe, the DEF supply line configured to supply DEF to the DEF doser.

In another example, the DEF doser can be located in the mixing pipe at a position that is separated from an inner radial surface of the mixing pipe. The inner radial surface of the mixing pipe can include a textured surface configured to create turbulent flow of the diesel exhaust at the inner radial surface of the mixing pipe to decrease a probability that atomized DEF impinges on the inner radial surface of the mixing pipe. The textured surface can include a plurality of dimples.

In another example, the mixer can include a redox metal oxide catalyst active in performance of direct urea hydrolysis reaction. The mixer can include a wiremesh mixer. In one example, the mixer can be a static mixer, and the static mixer can be a tortuous path static mixer.

In another example, the mixing pipe and the mixer have cylindrical shapes, and a cross sectional area of an entrance of the mixing pipe is between about 30% and about 75% smaller than a cylindrical shape of the cross sectional shape of a first portion of the mixing pipe. The entrance of the mixing pipe can be restricted by a plurality of baffle plates configured to contribute to the angular moment of the diesel exhaust. The mixing pipe and the mixer can have cylindrical shapes, and a diameter of the cylindrical shape of the mixing pipe and a diameter of the cylindrical shape of the mixer are between about 10% and about 50% larger than a diameter of a cylindrical shape of a first portion of the mixing pipe.

In another example, the one or more insertion pipes are configured to cause the diesel exhaust entering the mixing pipe to make a turn of about 135° or greater than 135° as the diesel exhaust is entering the mixing pipe. The one or more insertion pipes can include a serpentine portion preceding a point at which the diesel exhaust is inserted from the one or more insertion pipes into the mixing pipe. The axis of the one or more insertion pipes can be an axis of the serpentine portion, and an axis angle between the axis of the one or more insertion pipes and the longitudinal axis of the mixing pipe can be less than 90°. The axis angle between the axis of the one or more insertion pipes and the longitudinal axis of the mixing pipe is less than 45°.

In another example, the one or more insertion pipes can include a straight portion preceding the serpentine portion. The straight portion of the one or more insertion pipes can be substantially perpendicular to the mixing pipe. The axis of the one or more insertion pipes can be an axis of the straight portion of the one or more insertion pipes. A back pressure of the diesel exhaust caused by the mixing chamber can be limited so it does not exceed 7 kPa. The mixer comprises a plurality of baffles of up to 30° angles arranged in a plurality of different directions.

The mixer can have a first end coupled to the second end of the mixing pipe and a second end opposite the first end of the mixer, and a distance between the first end of the mixing pipe and the second end of the mixer may not exceed 10 inches. A distance between the first end of the mixing pipe and the second end of the mixing pipe may not exceed 8 inches. The one or more insertion pipes can be located in a region bounded in part by a first plane and a second plane, the first plane being coplanar with the first end of the mixing pipe and the second plane being parallel to and not exceeding 2 inches away from the first plane.

In another embodiment, a mixing chamber can include a mixing pipe configured to permit passage of diesel exhaust, a baffle component located in the mixing pipe and comprising a plurality of baffles, a diesel exhaust fluid (DEF) doser, and a mixer located in the mixing pipe downstream of the DEF doser. The plurality of baffles are configured to increase an angular momentum of the diesel exhaust passing through the mixing pipe. The DEF doser is configured to inject atomized DEF into the diesel exhaust flowing in the mixing pipe downstream of the baffle component. The mixer is configured to convert the atomized DEF into gaseous ammonia and introduce the gaseous ammonia into the diesel exhaust.

In one example, the DEF doser is configured to inject the atomized DEF into the mixing pipe from a sidewall of the mixing pipe. An angle of the plurality of baffles can be selected based on an efficiency of mixing of the atomized DEF in the diesel exhaust. The angle of the plurality of baffles can be less than or equal to about 30°. A number of the plurality of baffles can be selected based on an efficiency of mixing of the atomized DEF in the diesel exhaust. The number of the plurality of baffles is greater than or equal to eight and less than or equal to twenty six. The baffle component and the mixer can be located substantially coaxially with the mixing pipe.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a diagrammatic representation of a prior art DEF doser port mounted onto an exhaust pipe.
FIGURE 2A is a chart depicting a rate of change of DEF droplet diameter and FIGURE 2B includes a chart depicting relationship between distance and residence time for H₂O evaporation and NH₃ formation from atomized DEF.
FIGURE 3 is a chart depicting activation energy barrier for a particular SCR reaction.
FIGURE 4A depicts a DEF doser system that includes a pipe with exhaust flowing through the pipe, and FIGURE 4B depicts a wire mesh static mixer used in the system shown in FIGURE 4A.
FIGURE 5 depicts an embodiment of a mixing chamber for treatment of diesel exhaust, in accordance with the embodiments disclosed herein.
FIGURE 6A depicts an embodiment of a manifold that can be used to direct diesel exhaust as it enters the mixing pipe, in accordance with the embodiments disclosed herein, and FIGURE 6B depicts an embodiment of a baffle component that can be used to increase angular momentum of diesel exhaust in the manifold shown in FIGURE 6A.
FIGURE 7A depicts a cross-sectional view of another embodiment of a mixing chamber, in accordance with the embodiments disclosed herein, and FIGURE 7B depicts an embodiment of an exhaust treatment system, in accordance with the embodiments disclosed herein.
FIGURE 8 depicts another embodiment of a mixing chamber, in accordance with the embodiments disclosed herein.
FIGURE 9 depicts a portion of an embodiment of a mixing chamber, in accordance with the embodiments disclosed herein.
FIGURE 10 depicts embodiments of wire mesh static mixers, in accordance with the embodiments disclosed herein.
FIGURE 11 depicts an example of a wire mesh crimp specification, in accordance with the embodiments disclosed herein.
FIGURES 12A to 12C depict various embodiments of wire mesh crimp specifications, in accordance with the embodiments disclosed herein.
FIGURE 13A depicts another embodiment of a mixing chamber, in accordance with the embodiments disclosed herein, and FIGURES 13B to 13D depict embodiments of baffle components that can be used in accordance with the mixing chamber depicted in FIGURE 13A.
FIGURE 14 depicts an example of a method of treating diesel exhaust, in accordance with the embodiments disclosed herein.

### DETAILED DESCRIPTION

The detailed description set forth below in connection with the appended drawings is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the invention to the precise forms disclosed. Similarly, any steps described herein may be interchangeable with other steps, or combinations of steps, in order to achieve the same or substantially similar result.

Embodiments of the present disclosure are directed to diffusion apparatuses for facilitating the injection of diesel exhaust fluid (DEF), such as a nitrogen-oxides reductant solution (e.g., urea), into exhaust gas as part of a selective catalytic reduction (SCR) system. Embodiments of the mixing chamber direct diesel exhaust from an insertion pipe into a diffusion mixing pipe where DEF is injected and from the mixing pipe to a mixer. The diesel exhaust flows through the mixing pipe in such a way that increases the residence time of the diesel exhaust in the mixing pipe to increase mixing of the diesel exhaust with the injected DEF.

While urea is presently a preferred DEF used in the automotive industry for reducing nitrogen oxides in diesel exhaust, the present disclosure is not limited to apparatus for use in injecting a urea solution. Other forms of DEF, such as nitrogen-oxides reductant solutions (e.g. ammonia), will benefit from injection using the provided examples of the diffusion apparatus. Furthermore, the provided examples are not limited to the injection of a nitrogen-oxides reductant solution, but are useful for providing passage between any liquid injector and a gaseous flow.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known aspects have not been described in detail in order to not unnecessarily obscure various aspects of the present disclosure. Further, it will be appreciated that embodiments of the present disclosure may employ any combination of features described herein.

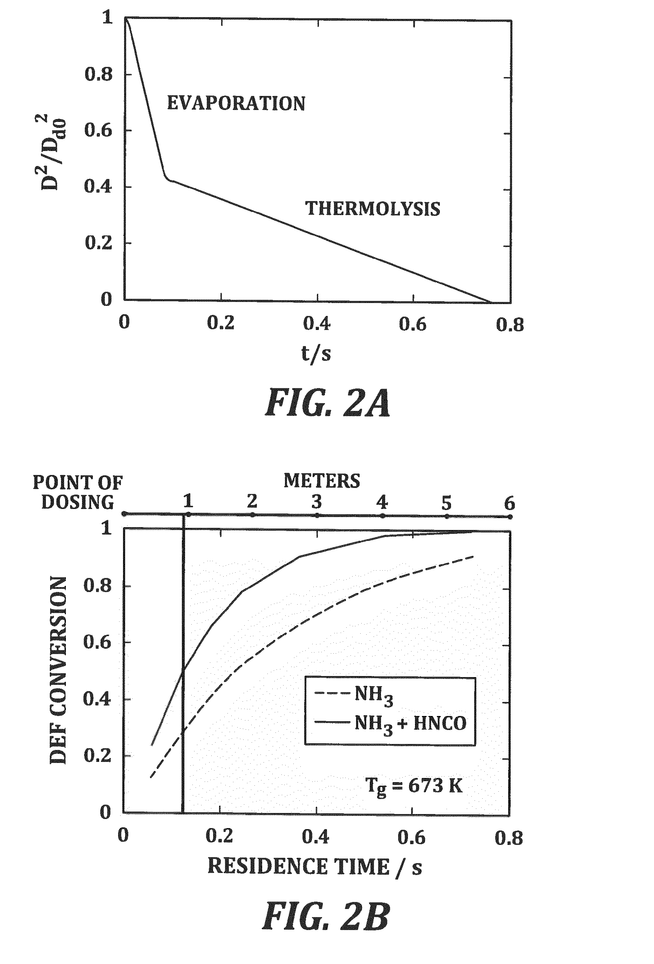

Distance between a DEF doser and an entrance to a SCR component and mass flow rate can affect the residence time for H₂O evaporation and NH₃ formation from atomized DEF solution, at a given temperature. FIGURE 2A is a chart depicting a rate of change of DEF droplet diameter and FIGURE 2B includes a chart depicting relationship between distance and residence time for H₂O evaporation and NH₃ formation from atomized DEF. In FIGURE 2B, the vertical line in the chart depicts a distance and corresponding residence time for a particular EAS. As is shown in FIGURES 2A and 2B, the more compact an EAS, the less favorable conditions for thermal decomposition of atomized DEF. The area that is to the left of the NH3 + HNCO curve in FIGURE 2B represents an amount of DEF that has not been conveted by thermal decomposition. This undecomposed DEF, in combination with the high concentration of HNCO, helps to facilitate DEF deposit formation.

Chemical processes that occur during the DEF atomization and SCR process include:

H₂O evaporation ........................................... (endothermic) (1)

DEF → NH₃ + HNCO ................................. (endothermic) (2)

HNCO + H₂O → NH₃ + CO₂ ......................... (hydrolysis) (3)

Both reactions (1) and (2) are thermal processes and, as such, they are directly dependent upon engine exhaust flow conditions. However, at or above 300°C, these reactions typically proceed rapidly. Reaction (3) is a limiting step, as it proceeds slowly in the gas phase and requires contact with a catalyst surface to achieve reasonable reaction rates. An SCR catalyst can serve this purpose under these circumstances. This is one reason for inclusion of metal oxides of titanium, tungsten and zirconium in SCR catalyst formulations.

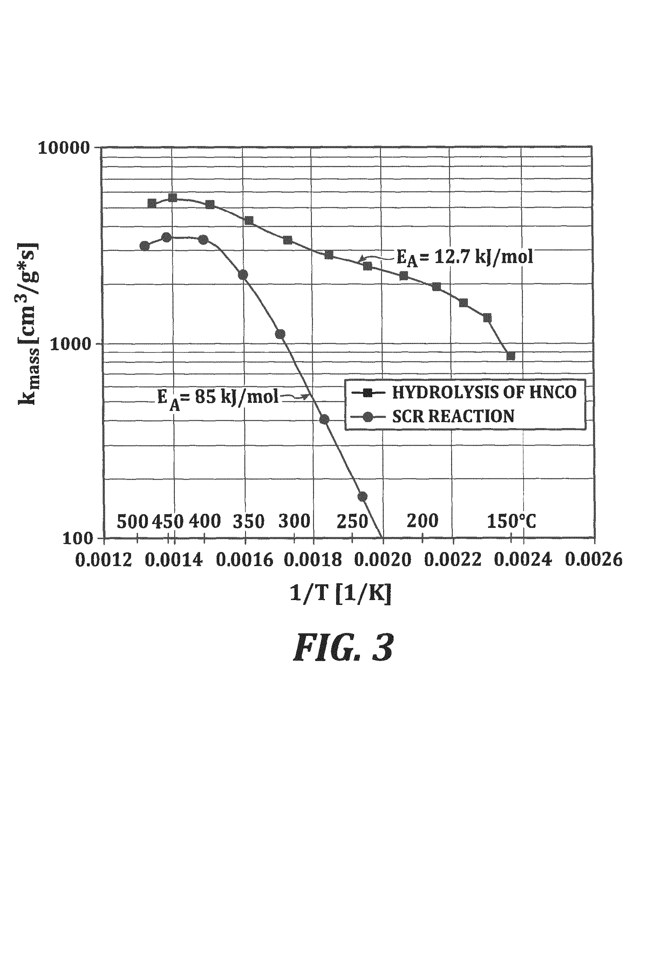

As a result of the dramatically slow reaction rate of reaction (3) in the gas phase, high concentrations of HNO can accumulate locally and react with undecomposed DEF. This is one reason, among a number of possible reasons, for the start and progression of DEF deposit formation. With more compact EAS designs, the restricted volumes and flow paths particularly favors deposit formation by this mechanism. FIGURE 3 depicts the activation energy barrier for the SCR reaction. Compared to HNCO hydrolysis, the activation energy barrier for the SCR reaction is higher, significantly more temperature sensitive, and prohibitively high at temperatures below about 230°C. This means that, at low temperatures, the SCR catalyst can play a crucial role in hydrolyzing HNCO and providing more NH₃ for the SCR reaction to proceed. Also, it shows that HNCO hydrolysis helps to prevent significant localized accumulation of HNCO that may result in deposit formation. The dual function of SCR catalyst plays a large role in dictating SCR component size (e.g., weight, volume, catalyst landing cost). SCR catalyst size can be reduced significantly if a method can be found to efficiently perform reaction (3) and/or directly hydrolyze DEF, such as urea, as shown in reaction (4):

H₂NCONH₂ + H₂O → 2NH₃ + CO₂..... (urea hydrolysis) (4)

When atomized DEF solution comes into contact with surfaces (i.e., impinges on the surfaces) due to mal-distribution of DEF, the spray will have a cooling effect. With lower temperatures, the rate of the thermally driven reactions (1) and (2) are negatively impacted. Ultimately, this can lead to deposit formation. This presents a major challenge for achieving efficient mixing in compact EAS. Impingement is directly linked with both DEF deposit formation and mal-distribution of flow and NH₃ uniformity.

Static mixers are routinely used in EASs to achieve mixing of atomized DEF solution droplets and engine exhaust. Despite the common occurrence of DEF deposits at or in the vicinity of the mixer, and even a foot or more downstream of the mixer, the EAS can be operated to meet emission standards. As emissions standards, fuel economy, and space requirements become more and more stringent, conventional static mixers alone will not continue to perform well enough for heavy duty diesel applications. These conflicting needs must be addressed in the development of compact EASs with improved dosing and mixing technologies.

Prior DEF/SCR systems have a number of drawbacks, including some or all of: insufficient time or resident distance for slow reaction kinetics, negative impact on SCR catalyst function (e.g., from unavailability of NOₓ reduction active sites, premature aging, slip of particulate matter, and short SCR components), and low DEF dosing rates. In general, existing systems fail to provide efficient DEF atomization and mixing of DEF mist with engine exhaust. Thus, existing systems fail to provide mass flow distribution and NH₃ uniformity indices close to unity. Existing systems also fail to decompose (or convert) DEF sufficiently well to reduce deposit formation.

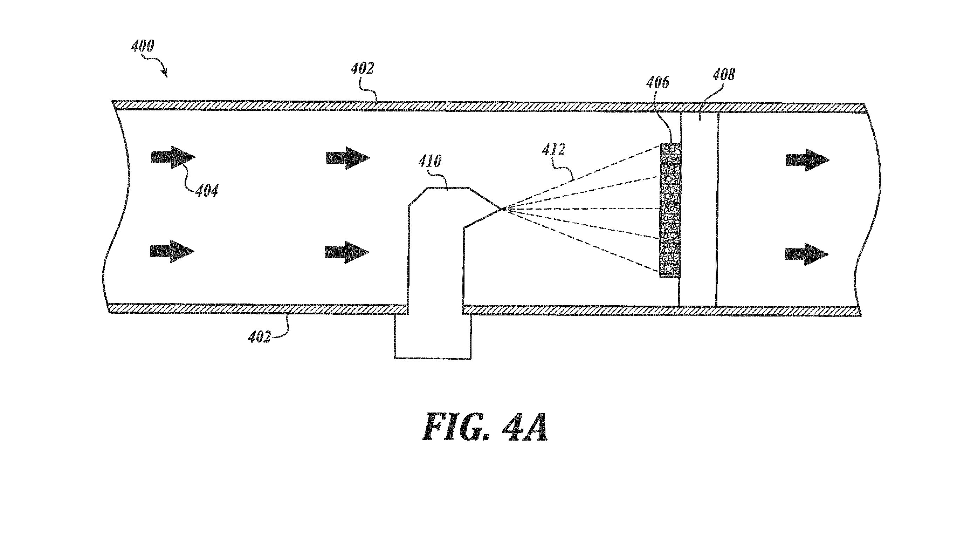

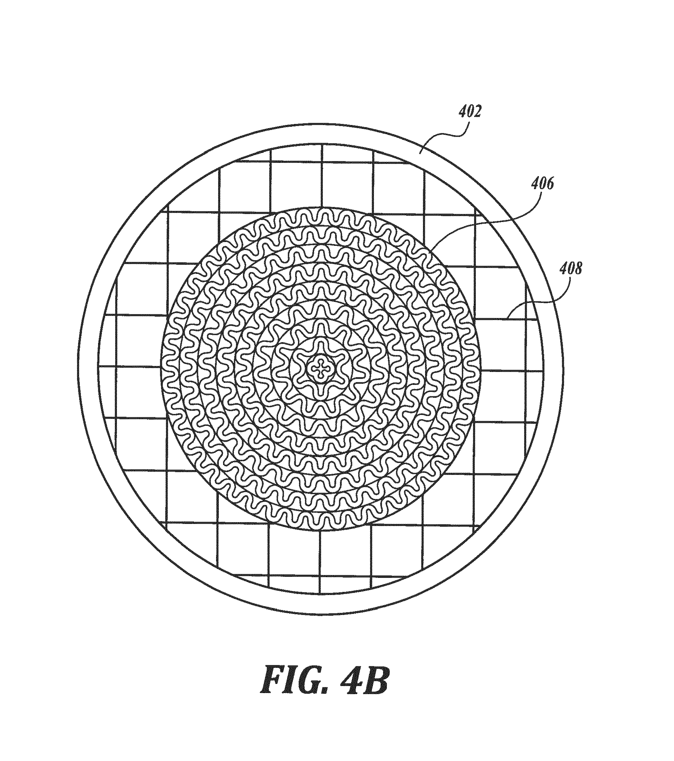

FIGURE 4A depicts a system 400 that includes some of the above-referenced issus. The system 400 includes a pipe 402 with exhaust 404 flowing through the pipe 402. The system 400 includes a wire mesh static mixer 406 connected to baffles 408 within the pipe 402. FIGURE 4B depicts a view of the wire mesh static mixer 406 in the system 400. Returning to FIGURE 4A, a DEF doser 410 is located in the pipe 402 upstream of the wire mesh static mixer 406 and the baffles 408. The DEF doser 410 injects atomized DEF 412 into the stream of the exhaust 404. This approach has been used to catalytically hydrolyze DEF to gaseous NH₃, but have been reported to have limited success due to inconsistent results. In particular, this type of arrangement can allow relatively high HNCO concentrations to accumulate. Such HNCO accumulation makes the EAS susceptible to deposit formation and can require further SCR catalyst involvement to achieve full hydrolysis. One issue with the design shown in FIGURE 4A is the portion of the DEF doser 410 that protrudes from the pipe 402 to the point at which the atomized DEF 412 leaves the DEF doser 410. While this arrangement allows the atomized DEF 412 at a location that is separated from the inner surface of the pipe 402, the protrusion of the DEF doser 410 from the pipe 402 can disrupt the flow patterns of the exhaust 404 that passes by the DEF doser 410.

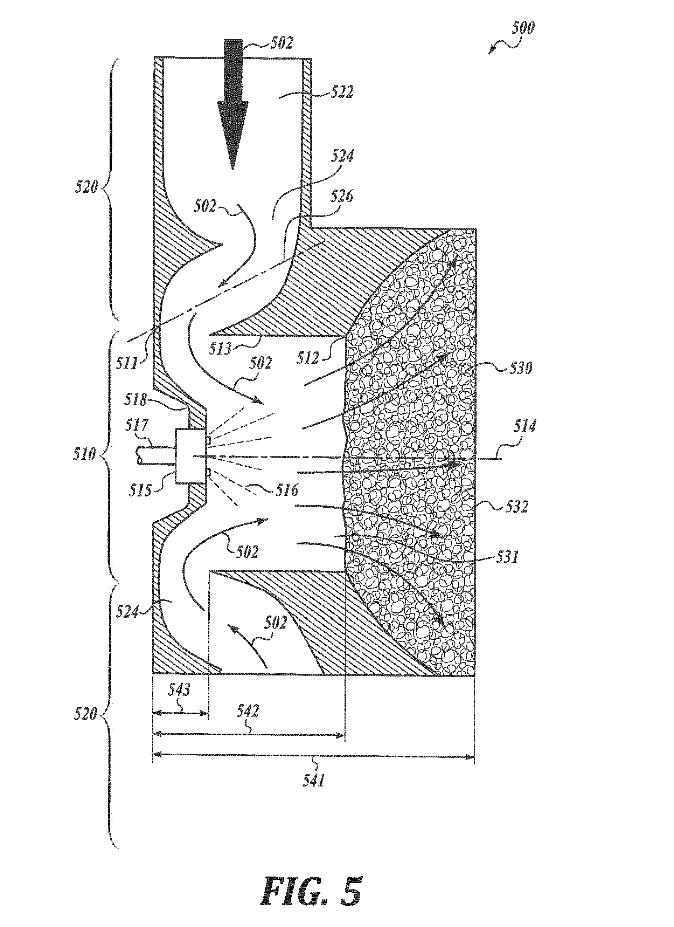

FIGURE 5 depicts an embodiment of a mixing chamber 500 for treatment of diesel exhaust 502. The mixing chamber 500 includes a mixing pipe 510, one or more insertion pipes 520, and a mixer 530. The mixing pipe 510 includes a first end 511 and a second end 512 and the diesel exhaust 502 passes from the first end 511 to the second end 512. The mixing pipe 510 includes an inner radial surface 513 and a longitudinal axis 514. The mixing pipe 510 also includes a DEF doser 515 that injects atomized DEF 516 into the diesel exhaust 502 as the diesel exhaust 502 passes from the first end 511 to the second end 512. The DEF doser 515 can be fed by a DEF supply line 517. In the particular embodiment shown in FIGURE 5, the DEF doser 515 is located on a portion 518 of the first end 511 that is indented toward the second end 512. This arrangement allows the DEF doser 515 to be located near the longitudinal axis 514 between the first end 511 and the second send 512. It also allows the DEF doser 515 to be located at a position that is separated from the inner radial surface 513 of the mixing pipe 510. A portion of either the DEF doser 515 or the DEF supply line 517 can pass through the indented portion 518. Such an arrangement can allow the diesel exhaust 502 to enter the mixing pipe 510 before the location of the DEF doser 515 without the DEF doser 515 or the DEF supply line 517 affecting the flow of the diesel exhaust 502.

The one or more insertion pipes 520 insert the diesel exhaust 502 into the mixing pipe 510 near the first end 511 such that the diesel exhaust 502 entering the mixing pipe 510 has angular momentum with respect to the longitudinal axis 514 of the mixing pipe 510. The angular momentum of the diesel exhaust 502 in the mixing pipe 510 can increase the residence time of the diesel exhaust 502 in the mixing pipe 510 because the diesel exhaust 502 is moving in a circular or swirling motion around the longitudinal axis 514 of the mixing pipe 510 as it also moves from the first end 511 to the second end 512 of the mixing pipe 510. The increased residence time of the diesel exhaust 502 in the mixing pipe increases the uniformity of mixing of the atomized DEF 516 with the diesel exhaust 502. The circular or swirling motion of the diesel exhaust 502 also increases turbulence in the flow of the diesel exhaust 502 and the increased turbulence increases the uniformity of mixing of the atomized DEF 516 with the diesel exhaust 502. The angular momentum of the diesel exhaust 502 can cause the highest velocity of the diesel exhaust 502 in the mixing pipe 510 to be near the inner radial surface 513. The higher velocity of the diesel exhaust 502 near the inner radial surface 513 can increase the likelihood that any atomized DEF 516 that is coming close to impinging on the inner radial surface 513 will instead mix with the diesel exhaust 502 (i.e., decreasing the likelihood that the atomized DEF 516 impinges on the inner radial surface 513).

The one or more insertion pipes 520 include a straight portion 522 and a serpentine portion 524. The straight portion 522 can be perpendicular to the mixing pipe 510. The serpentine portion 524 can be arranged so that the diesel exhaust 502 makes a turn of more than 90° as the diesel exhaust 502 enters the mixing pipe 510. In one embodiment, the serpentine portion 524 is arranged so that the diesel exhaust 502 makes a turn of about 135° as the diesel exhaust 502 enters the mixing pipe 510. Causing the diesel exhaust 502 to turn in this way increases the angular momentum of the diesel exhaust 502 entering the mixing pipe 510.

The one or more insertion pipes 520 includes an axis 526. In the embodiment shown in FIGURE 5, the axis 526 of the one or more insertion pipes 520 is an axis of the serpentine portion 526. In other embodiments, the axis 526 of the one or more insertion pipes 520 could be an axis of the straight portion 522. A cross section of the mixing pipe 510 that is perpendicular to the longitudinal axis 514 can be larger than a cross section of the one or more insertion pipes 520 that is perpendicular to the axis 526 such that pressure in the diesel exhaust 502 drops as the diesel exhaust 502 passes from the one or more insertion pipes 520 into the mixing pipe 510. The lower pressure in the mixing pipe 510 decreases the flow rate of the diesel exhaust 502 to increase the residence time of the diesel exhaust 502 in the mixing pipe 510.

The mixer 530 is coupled to the second end 512 of the mixing pipe 510. The mixer 530 is configured to introduce gaseous ammonia into the diesel exhaust 502 injected with the atomized DEF 516. In one embodiment, the gaseous ammonia is introduced by catalytically hydrolyzing some of the diesel exhaust 502 injected with the atomized DEF 516 to form gaseous NH₃ (e.g., according to equation (4) shown above). The ammonia is usable later in a selective catalytic reduction (SCR) function.

The mixer 530 can be a static mixer. In one embodiment, the mixer 530 is a tortuous path static mixer. A tortuous path static mixer includes no direct (i.e., linear) paths from one side of the mixer 530 to the other side. This arrangement causes as much of the diesel exhaust 502 injected with the atomized DEF 516 to impinge on some portion of the mixer 530 as possible. In this way, the effect of the catalyst can maximize the conversion of the diesel exhaust 502 injected with the atomized DEF 516 into gaseous NH₃. In one example, the mixer 530 includes one or more of a wire mesh or a ceramic material. Portions of the mixer 530 can be coated with a catalyst that aids in the conversion of the diesel exhaust 502 injected with the atomized DEF 516 into gaseous NH₃.

A cross section of the mixer 530 that is perpendicular to the longitudinal axis 514 can be larger than a cross section of the mixing pipe 510 that is perpendicular to the axis 526 such that pressure in the diesel exhaust 502 injected with the atomized DEF 516 drops as the diesel exhaust 502 injected with the atomized DEF 516 passes from the mixing pipe 510 into the mixer 530 at a first end 531 of the mixer. The lower pressure in the mixer 530 decreases the flow rate of the diesel exhaust 502 to increase the residence time of the diesel exhaust 502 in the mixer 530. The mixing pipe 510 and the mixer 530 can have cylindrical shapes. In one embodiment, a cross sectional area of an entrance of the mixing pipe 510 is between about 30% and about 75% smaller than a cross sectional shape of the first portion of the mixing pipe 510. In another embodiment, the diameter of the mixer 530 and a diameter of the mixing pipe 510 can be between about 10% and about 50% larger than the diameter of a first portion of the mixing pipe 510. Gaseous ammonia is be introduced into the diesel exhaust 502 injected with the atomized DEF 516 in the mixer 530 and passes out of a second end 532 of the mixer 530. The diesel exhaust 502 with the gaseous ammonia can then undergo an SCR function.

The mixing chamber 500 can have a compact form. In one embodiment, a distance 541 from the first end 511 of the mixing pipe 510 to the second end 532 of the mixer 530 can be equal to or less than about ten inches. In another embodiment, a distance 542 from the first end 511 of the mixing pipe 510 to the second end 512 of the mixing pipe 510 can be equal to or less than about eight inches. In another embodiment, the one or more insertion pipe 520 can be configured to insert the diesel exhaust 502 into the mixing pipe in a region bounded in part by a first plane and a second plane, the first plane being coplanar with the first end 511 of the mixing pipe 510 and the second plane being parallel to and not exceeding a distance 543 away from the first plane. The distance 543 can be no more than about two inches. In one particular embodiment, the one or more insertion pipe 520 is located within two inches of the first end 511 of the mixing pipe 510, the second end 512 of the mixing pipe 510 is located within eight inches of the first end 511 of the mixing pipe 510, and the mixer 530 is located within ten inches of the first end 511 of the mixing pipe 510.

The mixing chamber 500 can be configured to limit the amount of back pressure introduced into the exhaust system by the mixing chamber 500. As back pressure in the exhaust system increases, fuel consumption by the vehicle also increases. Increasing the angular momentum of the exhaust gas 502 (e.g., using baffles or other components) as the exhaust gas 502 enters the mixing pipe 510 can add to the back pressure introduced by the mixing chamber 500. In one embodiment, the mixing chamber 500 can be configured such that the back pressure introduced by the mixing chamber 500 does not exceed 7 kPa.

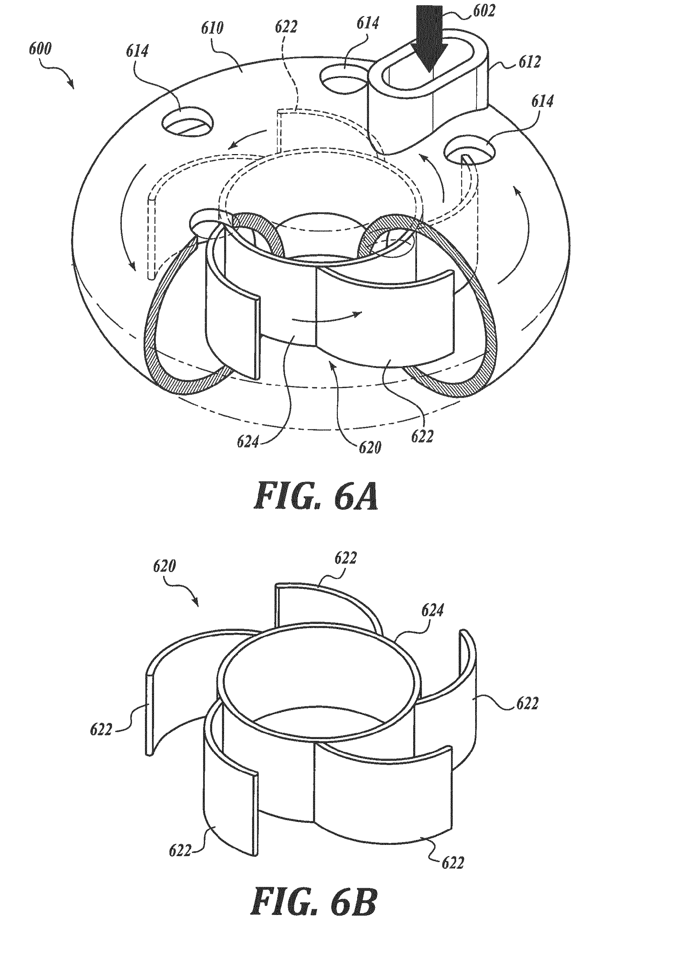

FIGURE 6A depicts an embodiment of a manifold 600 that can be used to direct diesel exhaust 602 as it enters a mixing pipe (e.g., in mixing pipe 510 as the diesel exhaust 502 enters the mixing pipe 510 from the one or more insertion pipes 520). The manifold 600 includes a housing 610 that has an inlet 612 that permits entry of diesel exhaust 602 from an insertion pipe. While the embodiment of the housing 610 shown in FIGURE 6A has only one inlet 612, any number of inlets can be included in housing 610. While the housing 610 shown in FIGURE 6A has a toroidal shape with a circular cross section, the housing 610 can also have a toroidal shape with any other cross section (e.g., a toroid with a square cross section) or any other shape. The insertion of the diesel exhaust 602 into the inlet 612 can cause the diesel exhaust 602 to have angular momentum with respect to an axis of the mixing pipe (not shown). The shape of the housing 610 and the manner of inserting the diesel exhaust 602 can cause angular acceleration of the diesel exhaust 602 in the housing 610.

The housing 610 includes outlets 614 that permit the diesel exhaust 602 to exit the housing 610 toward the center of the housing 610. A baffle component 620 can be located in the center of the housing 610. The baffle component 620 (illustrated alone in FIGURE 6B) includes a number of baffles 622 affixed to a center ring 624. The baffles 622 can be arranged to direct diesel exhaust 602 exiting the outlets 614 to pass through the mixing pipe (not shown). The arrangement of the baffles 622 may maintain much of the angular momentum of the diesel exhaust 602 exiting the outlets 614 such that the diesel exhaust 602 continues to have angular momentum as it passes through the mixing pipe. The center ring 624 can be located around a DEF doser in the mixing pipe. As the diesel exhaust 602 exits the outlets 614 near the central ring 624, the diesel exhaust 602 exits the housing 610 near the DEF doser, increasing the likelihood that the diesel exhaust 602 will be injected with atomized DEF from the DEF doser. The baffle component 620 can be static in that it remains fixed with respect to the mixing pipe (i.e., it does not rotate with respect to the longitudinal axis of the mixing pipe).

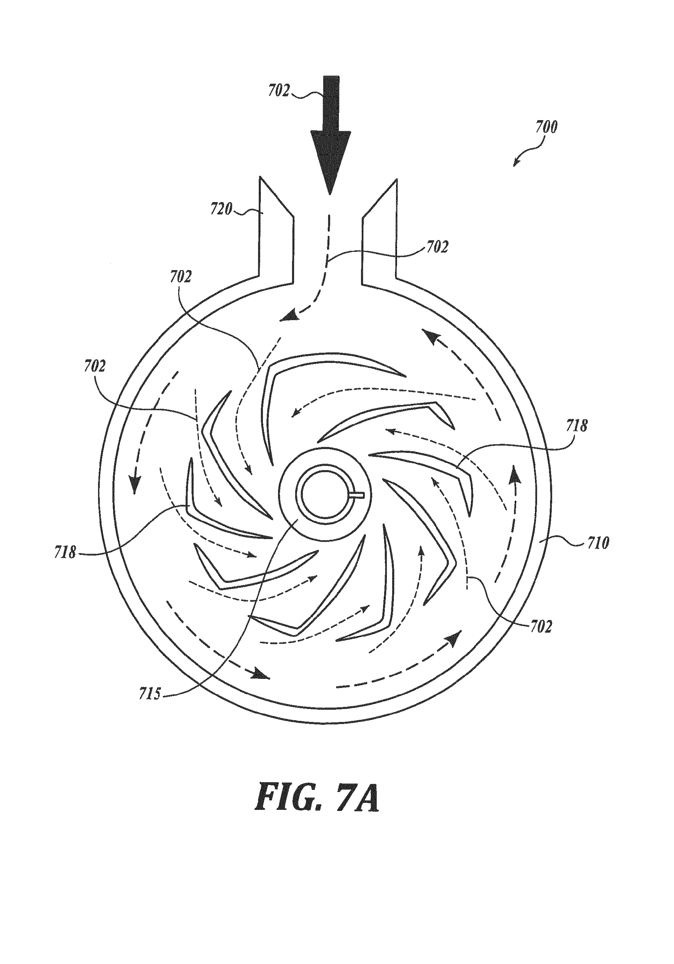

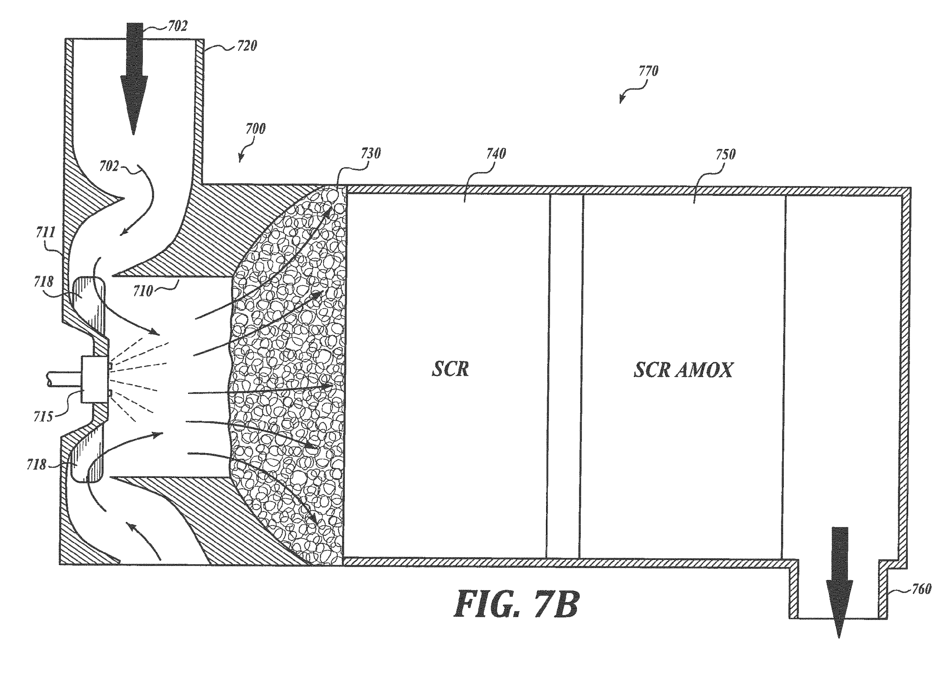

FIGURES 7A depicts a cross-sectional view of another embodiment of a mixing chamber 700, and FIGURE 7B depicts an embodiment of an exhaust treatment system 770 that includes the mixing chamber 700. The mixing chamber 700 includes a mixing pipe 710, one or more insertion pipes 720, and a mixer 730. The exhaust treatment system 770 includes the mixing chamber 700, an SCR component 740, an ammonia oxidation catalyst (AMOX) 750, and an outlet 760. Diesel exhaust 702 is inserted from the one or more insertion pipes 720 into the mixing pipe 710 near a first end 711 of the mixing pipe 710 such that the diesel exhaust 702 has angular momentum with respect to a longitudinal axis of the mixing pipe 710. The mixing pipe 710 includes static baffles 718 that are configured to direct the diesel exhaust 702 to pass through the mixing pipe 710 toward the mixer 730. The static baffles 718 are located around a DEF doser 715 that injects atomized DEF into the diesel exhaust 702 passing through the mixing pipe 710 toward the mixer 730. The diesel exhaust 702 injected with the atomized DEF passes through the mixer 730 where gaseous ammonia is introduced into the diesel exhaust 702. The SCR component 740 performs an SCR function on the diesel exhaust and the SCR function can use the gaseous ammonia in the diesel exhaust 702. The diesel exhaust 702 passes into the AMOX 750 and then through the outlet 760 on the way to an exhaust pipe. The AMOX 750 is configured to remove excess ammonia from the diesel exhaust 702. Any of the other embodiments of mixing chambers disclosed herein can be used in the exhaust treatment system 770.

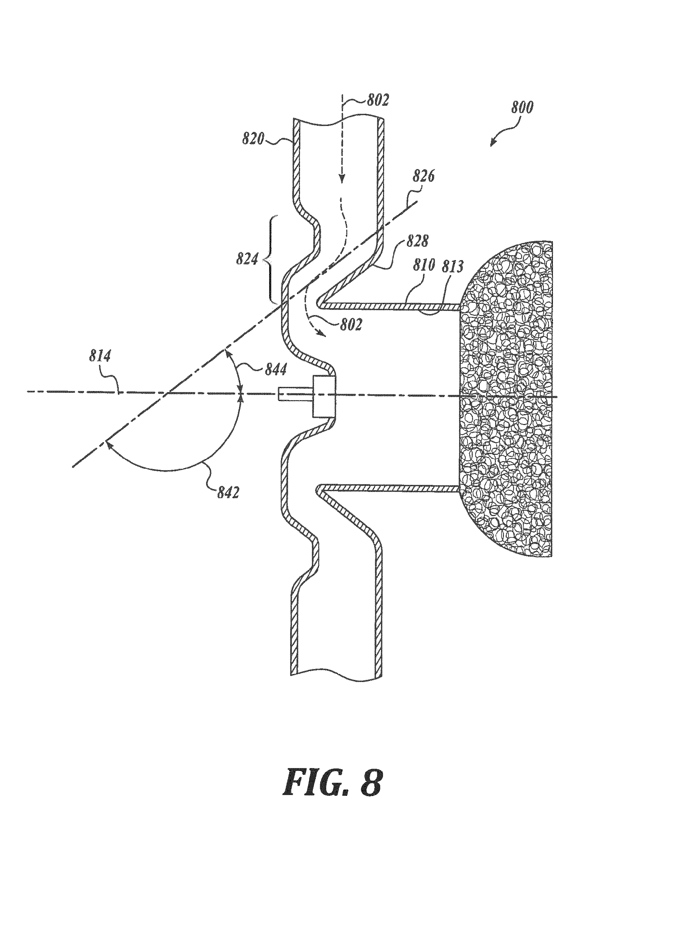

FIGURE 8 depicts another embodiment of a mixing chamber 800. The mixing chamber 800 includes a mixing pipe 810 and an insertion pipe 820. The mixing pipe 810 has a longitudinal axis 814 and the insertion pipe 820 has an axis 826. In the embodiment shown in FIGURE 8, the insertion pipe 820 has a serpentine section 824 and the axis 826 is an axis of the serpentine section 824.

As diesel exhaust 802 passes from the insertion pipe 820 to the mixing pipe 810, the diesel exhaust 802 experience a turn. A turn angle 842 can be defined as the angle from the axis 826 of the insertion pipe 820 to the longitudinal axis 814 of the mixing pipe 810 that the diesel exhaust 802 turns to enter the mixing pipe 810. The turn angle 842 can be an angle greater than 90°. In one embodiment, the turn angle 842 is about or greater than 135°. In another embodiment, the turn angle 842 is about 135°. The turn angle 842 can also be defined in other ways, such as an angle between an inner wall 828 of the serpentine section 824 and an inner radial wall 813 of the mixing pipe 813. The configuration of the mixing pipe 810 and the serpentine section 824 can be defined by an axis angle 844 between the longitudinal axis 814 of the mixing pipe 810 and the axis 826 of the insertion pipe 820. The axis angle 844 can be an angle less than 90°. In one embodiment, the axis angle 844 is about or less than 45°. In another embodiment, the axis angle 844 is about 45°. The embodiments of turn angles and axis angles described with respect to mixing chamber 800 in FIGURE 8 can be used with any the other embodiments of mixing chambers described herein.

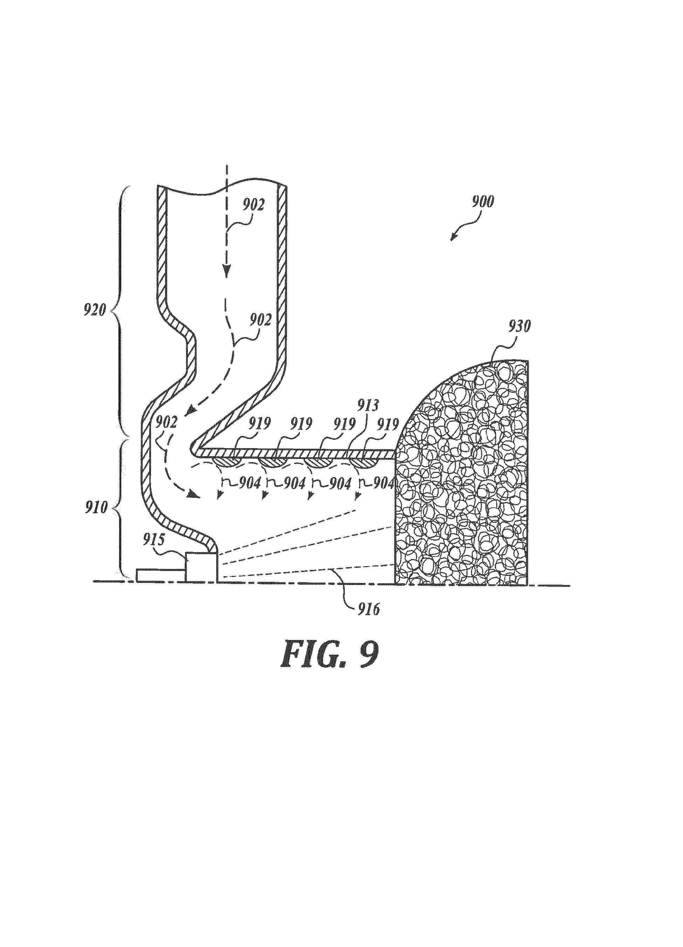

FIGURE 9 depicts a portion of an embodiment of a mixing chamber 900 with a textured mixing pipe 910 that can be used in accordance with any of the mixing chambers described herein. The mixing chamber 900 includes a mixing pipe 910 and an insertion pipe 920. The mixing pipe 910 includes an inner radial surface 913. Diesel exhaust 902 is inserted into the mixing pipe 910 from the insertion pipe 920 and atomized DEF 916 is injected into the diesel exhaust 902 as the diesel exhaust 902 passes from the insertion pipe 920 to a mixer 930. The inner radial surface 913 includes texturing that creates disruptions 904 in the flow of the diesel exhaust 902. The disruptions 904 can increase the likelihood that the atomized DEF 916 mixes with the diesel exhaust 902 and, therefore, decrease the likelihood that the atomized DEF 916 impinges on the inner radial surface 913. In the embodiment shown in FIGURE 9, the texturing on the inner radial surface 913 is in the form of dimples 919 on the inner radial surface 913. Other forms of texturing are possible. For example, the dimples 919 can be replaced with ribs or any other protrusions that cause disruptions 904 in the flow of the diesel exhaust 902 near the inner radial surface 913. Any protrusions from the inner radial surface 913 (e.g., dimples 919, ribs, etc.) can be formed of the same material as the mixing pipe 910. Protrusions from the inner radial surface 913 can also be formed from other material and adhered to the inner radial surface 913 of the mixing pipe 910. Protrusions from the inner radial surface 913 can also be formed by a surface treatment on the inner radial surface 913 of the mixing pipe 910. At least a portion of the internal wall surfaces, up to the entire portion of the internal wall surface, of the mixing chamber and connecting pipes can be coated with a DEF hydrolysis catalyst to enhance conversion of DEF to gaseous ammonia and to minimize DEF deposit formation. In another example, texturing can be in the form of depressions into the inner radial surface 913 of the mixing pipe 910. The depressions can take any form, such as semispherical depressions, ring-shaped depressions, and the like.

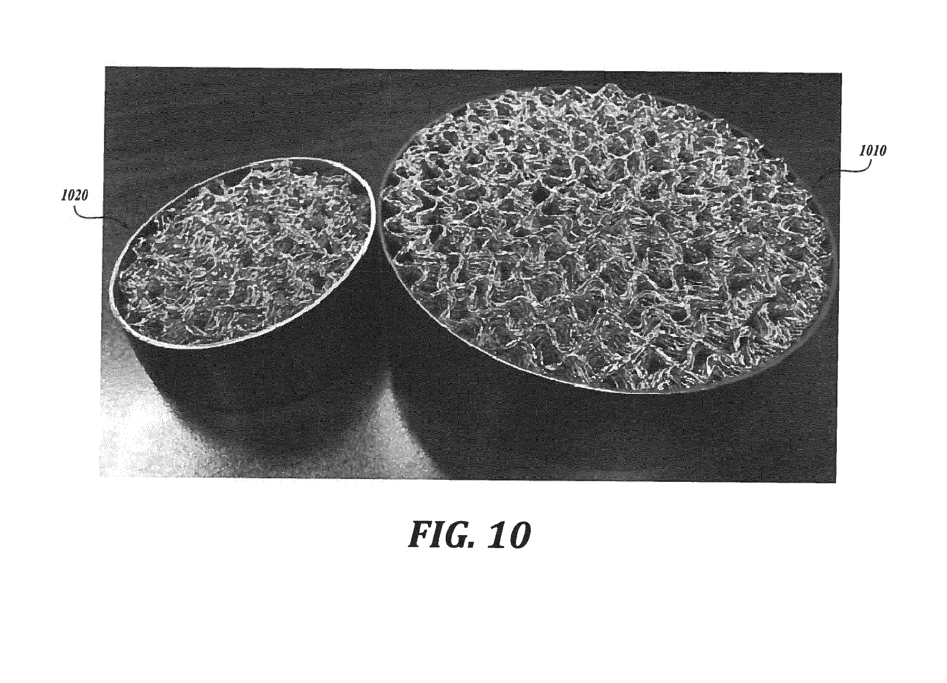

FIGURE 10 depicts embodiments of mixers 1010 and 1020. The mixers 1010 and 1020 are wire mesh type static mixers. The mixers 1010 and 1020 can be used as mixers in any of the embodiments of mixing chambers disclosed herein. The wire mesh of the mixers 1010 and 1020 can include one or more of patters, curves, bends, and/or any other feature that increases the likelihood that diesel exhaust passing through the mixers 1010 and 1020 will impinge on a portion of the wire mesh. Such mixers 1010 and 1020 can be referred to as tortuous path static mixers. While mixers 1010 and 1020 are depicted as wire mesh static mixers, any other type of mixer can be used, such as ceramic type mixers.

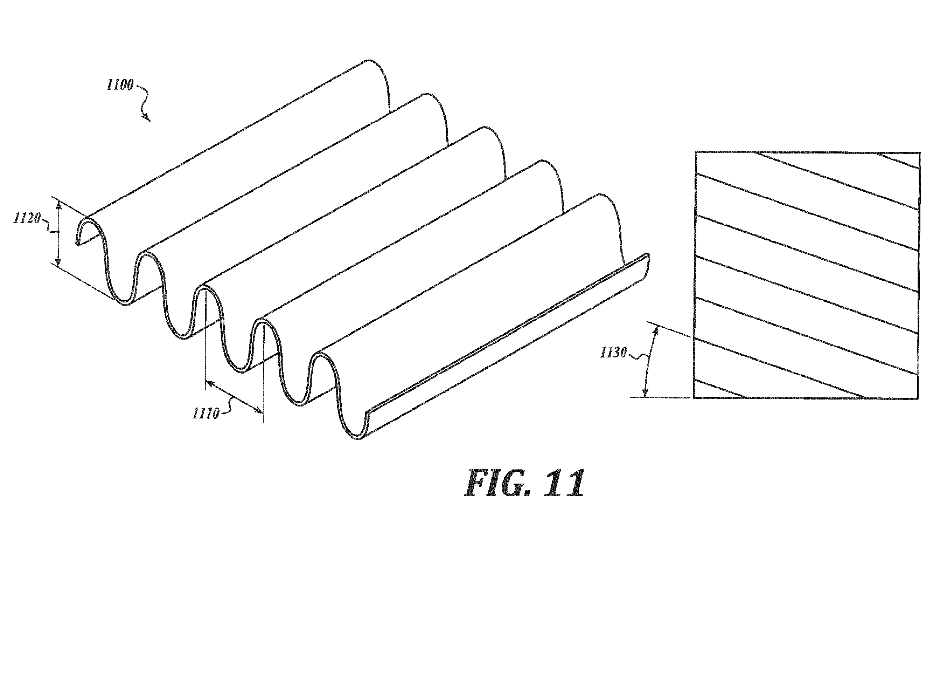

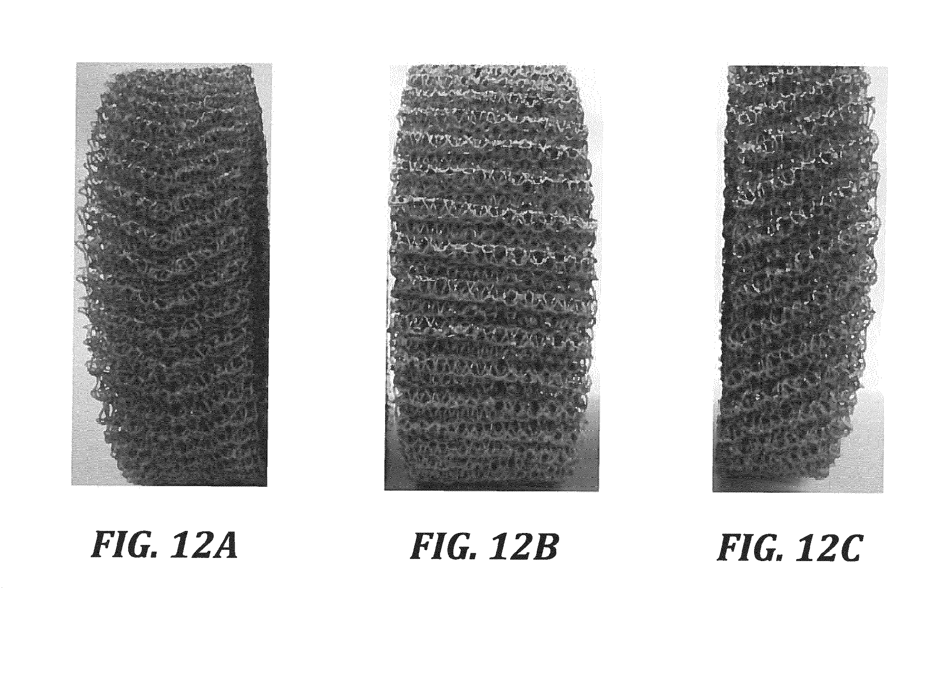

FIGURE 11 depicts an example of a wire mesh crimp specification 1100. The wire mesh crimp specification 1100 defines an outer edge of a wire mesh, such as the wire mesh of mixers 1010 and 1020 shown in FIGURE 10. The wire mesh crimp specification 1100 is defined by a crimp width 1110, a crimp height 1120, and a crimp angle 1130. A variety of different crimp widths 1110, crimp heights 1120, and crimp angles 1130 can be used. FIGURES 12A to 12C depict examples of wire mesh crimp specifications. FIGURE 12A depicts a wire mesh crimp specifications with a herringbone (i.e., V-shaped) configuration. FIGURE 12B depicts a wire mesh crimp specifications with a 10° crimp angle where the 10° crimp angle is angling up from right to left. FIGURE 12C depicts a wire mesh crimp specifications with a 30° crimp angle where the 30° crimp angle is angling up from left to right.

Any of the mixers described in this disclosure can be coated with a catalyst. The catalyst can be coated on the mixer (e.g., on a wire mesh of a tortuous path static mixer) to achieve efficient hydrolysis of DEF into NH₃ (see equation (4)). The coating can also minimize or eliminate HNCO or deposit formation. In one embodiment, the catalyst can enable dosing of DEF in the mixing chamber at relatively low temperatures (i.e. down as low as about 150°C). At least a portion of the internal wall surfaces, up to the entire portion of the internal wall surface, of the mixing chamber and connecting pipes can be coated with a DEF hydrolysis catalyst to enhance conversion of DEF to gaseous ammonia and to minimize DEF deposit formation.

In one embodiment, the catalyst is an 8 mol% yttria-stabilized zirconia. The catalyst was formed into a wash coat formulation that comprised 3.0 g catalyst, 4.4 g polyethylene oxide binder, 0.5 g polyethylene oxide/polypropylene oxide surfactant, 2.2 g water suspension medium. The wash coat formulation was stirred vigorously by hand, allowed to degas for 30 minutes and employed in dip coating pieces of wire mesh, and retrieved from a sample wire mesh mixer. The coated wire was air dried in the fume hood for 15 minutes, then transferred to an over for drying and sintering of the catalyst particle to form a coherent coating, as follows: 15 minutes at 105°C and 60 minutes at 500°C. Results from scanning electron microscope and energy-dispersive X-ray spectroscopy analysis of the resulting wash coat was analyzed to confirm the effectiveness of the wash coat application of portions of a wire mesh mixer. The same wash coat formulation was used to coat an alumina thermogravimetric analysis (TGA) pan. The catalyst-coated pan produced similar TGA results for DEF hydrolysis as using pristine catalyst powder added to 50% DEF solution in catalyst screening studies. Other examples of catalysts and reactors are described, for example, in Example 5 of U.S. Patent Application No. 14/486858, entitled "Urea Hydrolysis Reactor for Selective Catalytic Reduction," (Attorney Docket No. PCCR-1-44754), filed September 15, 2014, herein incorporated by reference in its entirety.

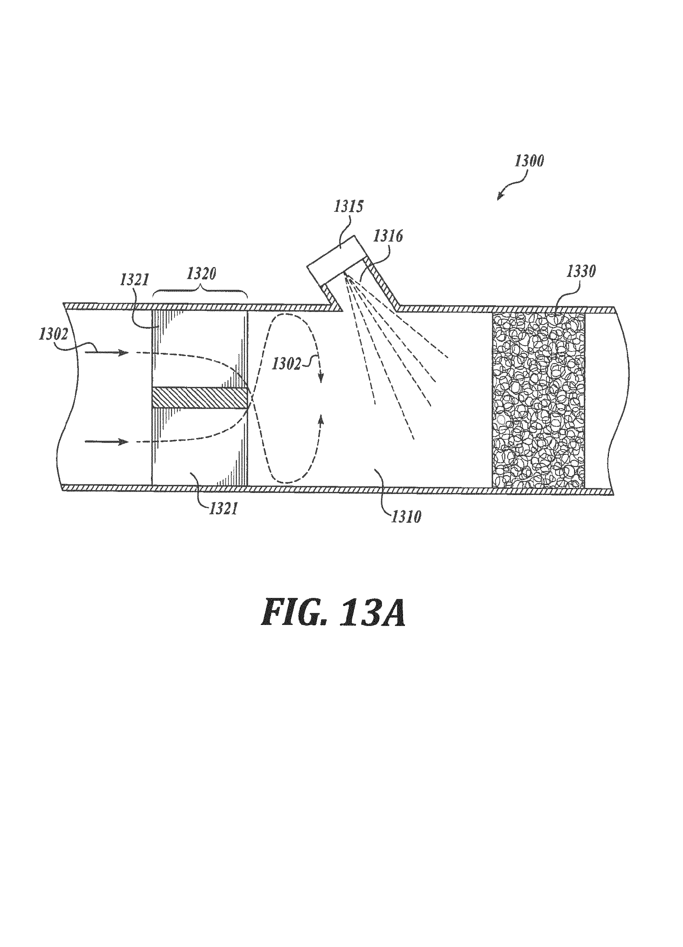

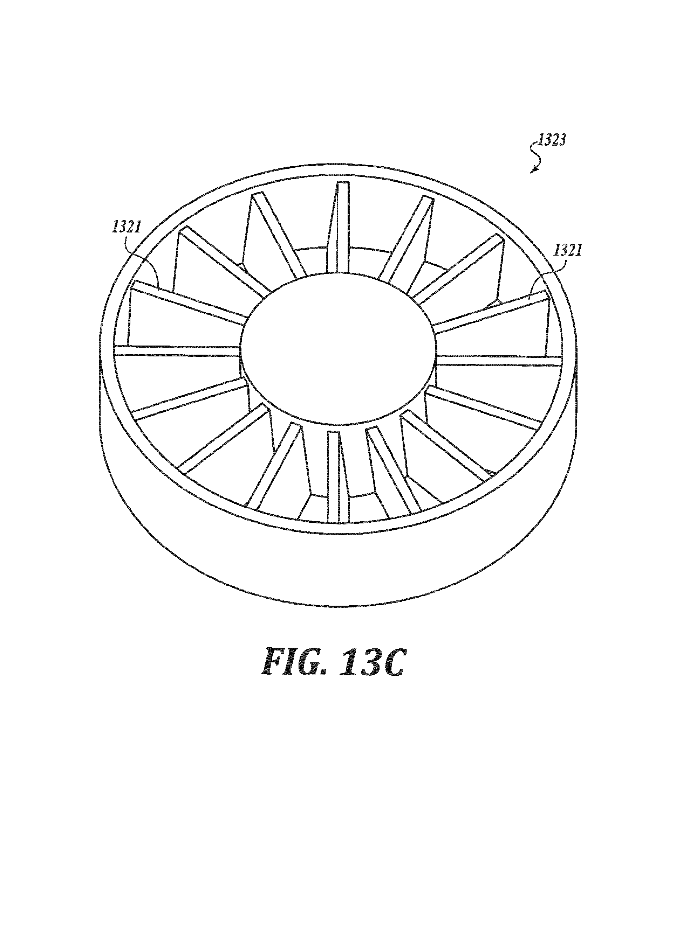

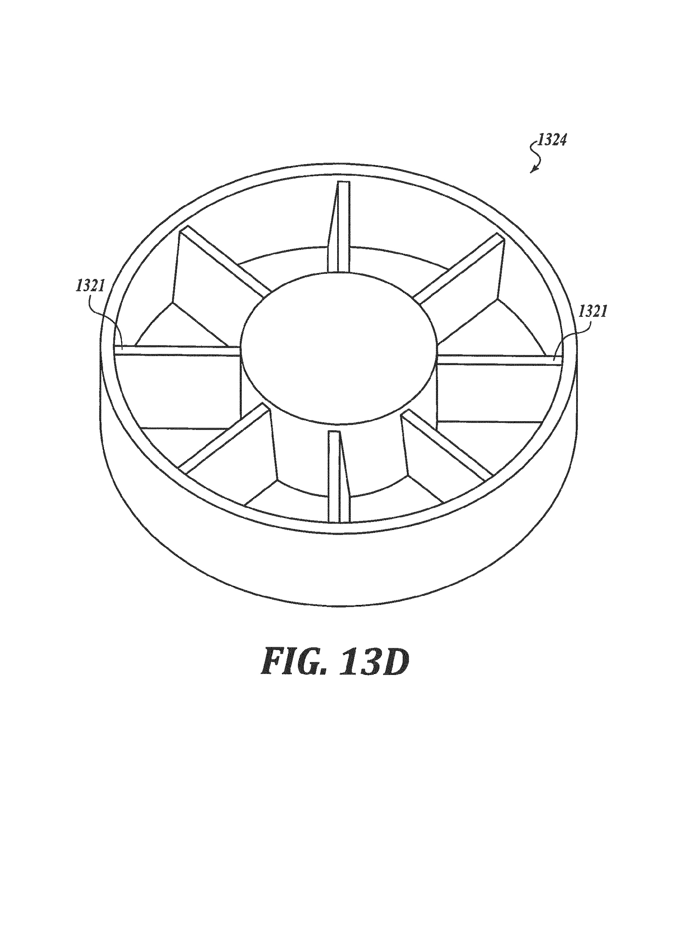

The improvements of mixing DEF with exhaust disclosed herein (e.g. by increasing angular momentum and using mixers) can be applied to traditional mixing chambers presently used in commercial applications. Accordingly, FIGURE 13A depicts an embodiment of a mixing chamber 1300 that is a modification of the prior art mixing chamber illustrated in FIGURE 1. Such a modified traditional mixing chamber may be seamlessly integrated into known exhaust systems, thereby providing improved DEF mixing without requiring reconfiguration of a vehicle's exhaust system. Turning now to FIGURE 13A, the mixing chamber 1300 includes a mixing pipe 1310 with a baffle component 1320 and a mixer 1330. Diesel exhaust 1302 enters the mixing pipe 1310 before the baffle component 1320 and flows through the mixing chamber 1300 to the mixer 1330. The mixing pipe 1310 includes a DEF doser 1315 that is located between the baffle component 1320 and the mixer 1330. The DEF doser 1315 is configured to inject atomized DEF 1316 into the diesel exhaust 1302 flowing in the mixing pipe 1310 from the baffle component 1320 to the mixer 1330. The DEF doser 1315 is located downstream of the baffle component 1320 and the mixer 1330 is located downstream of the DEF doser 1315. In the embodiment depicted in FIGURE 13A, the DEF doser 1315 is configured to inject the atomized DEF from a sidewall 1313 of the mixing pipe 1310. The baffle component 1320 includes a plurality of baffles 1321 that are configured to increase angular momentum of the diesel exhaust 1302 flowing through the mixing pipe 1310. Increasing the angular momentum of the diesel exhaust 1302 before the DEF doser 1315 increases the residence time of the diesel exhaust 1302 in the mixing pipe 1310 between the DEF doser 1315 and the mixer 1330 and increases the efficiency of mixing the atomized DEF 1316 in the diesel exhaust 1302. In the embodiment depicted in FIGURE 13A, the baffle component 1320 and the mixer 1330 are located substantially coaxially with the mixing pipe.

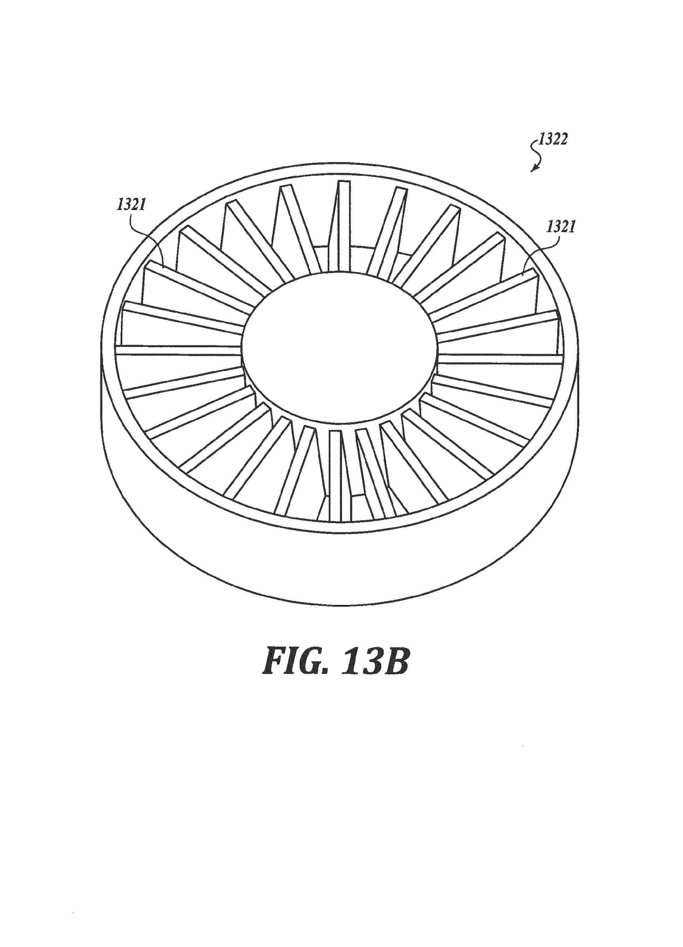

FIGURES 13B to 13D depict embodiments of baffle components 1322, 1323, and 1324, respectively, that can be used in accordance with the mixing chamber 1300 depicted in FIGURE 13A. Of the three baffle components 1322, 1323, and 1324, baffle component 1322 has the greatest number of baffles 1321 and baffle component 1324 has the fewest number of baffles 1321. The baffles 1321 in baffle component 1324 can have a greater angle than the baffles 1321 in baffle component 1322 because the baffles 1321 in baffle component 1324 are spaced farther apart from each other. In contrast, the baffles 1321 in baffle component 1322 can have a greater impact on the flow of diesel exhaust than the baffles 1321 in baffle component 1322 because the baffles 1321 in baffle component 1322 are spaced closer to each other. Returning to FIGURE 13A, the number of baffles 1321 and the angle of the baffles 1321 in baffle component 1320 have an effect on the linear velocity along the axis of the mixing pipe 1310 and the angular momentum around the axis of the mixing pipe of the diesel exhaust that passes through the baffle component 1320. The number of baffles 1321 and the angle of the baffles 1321 can be selected in an attempt to optimize the efficiency of mixing the atomized DEF 1316 in the diesel exhaust 1302 before the diesel exhaust 1302 reaches the mixer 1330. In one embodiment, the angle of the baffles is less than or equal to about 30°. In another embodiment, the number of baffles is greater than or equal to eight and less than or equal to twenty six.

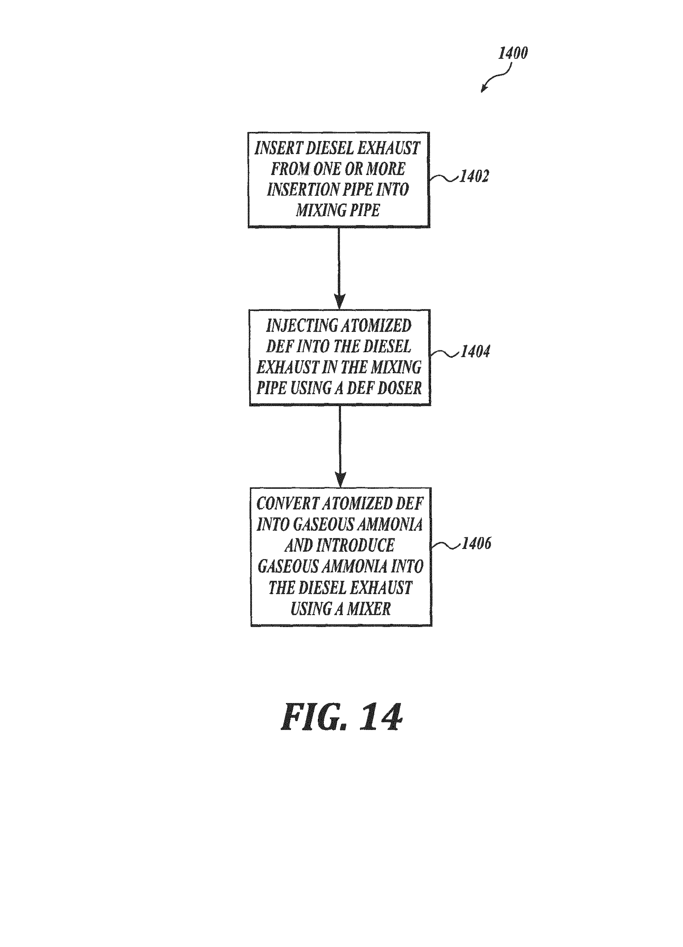

Any of the foregoing embodiments of mixing chambers and variations thereof can be used in a method of treating diesel exhaust. FIGURE 14 depicts an example of a method 1400 of treating diesel exhaust. At block 1402, diesel exhaust is inserted from one or more insertion pipes into a mixing pipe. The diesel exhaust can be inserted near a first end of the mixing pipe. The mixing pipe is configured to permit passage of the diesel exhaust from the first end to a second end of the mixing pipe. The diesel exhaust can be inserted into the mixing pipe such that the diesel exhaust entering the mixing pipe has angular momentum with respect to a longitudinal axis of the mixing pipe. A cross section of the mixing pipe perpendicular to the longitudinal axis of the mixing pipe is larger than a cross section of the one or more insertion pipes perpendicular to an axis of the one or more insertion pipes such that pressure in the diesel exhaust drops as the diesel exhaust passes from the one or more insertion pipes into the mixing pipe. At block 1404, atomized diesel exhaust fluid (DEF) is injected into the diesel exhaust flowing from the first end to the second end of the mixing pipe. At block 1406, atomized DEF is converted into gaseous ammonia and the gaseous ammonia is introduced into the diesel exhaust using a mixer coupled to the second end of the mixing pipe. The method 1400 depicted in FIGURE 14 can be modified by any of the other features or functions described herein.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the present disclosure, as claimed.

The embodiments of the invention in which an exclusive property or privilege is claimed are defined as follows:

## Claims

1. A mixing chamber for treatment of diesel exhaust, comprising:
a mixing pipe configured to permit passage of diesel exhaust from a first end of the mixing pipe to a second end of the mixing pipe, the mixing pipe comprising a diesel exhaust fluid (DEF) doser configured to inject atomized DEF into the diesel exhaust flowing from the first end to the second end;
one or more insertion pipes coupled to the mixing pipe and configured to insert the diesel exhaust into the mixing pipe near the first end of the mixing pipe such that the diesel exhaust entering the mixing pipe has angular momentum with respect to a longitudinal axis of the mixing pipe, and wherein a cross section of the mixing pipe perpendicular to the longitudinal axis of the mixing pipe is larger than a cross section of the one or more insertion pipes perpendicular to an axis of the one or more insertion pipes such that pressure in the diesel exhaust drops as the diesel exhaust passes from the one or more insertion pipes into the mixing pipe; and
a mixer coupled to the second end of the mixing pipe, wherein the mixer is configured to convert the atomized DEF into gaseous ammonia and to introduce the gaseous ammonia into the diesel exhaust.

2. The mixing chamber of Claim 1, wherein the DEF doser is located near the longitudinal axis of the mixing pipe between the first end and the second end such that the diesel exhaust is inserted from the one or more insertion pipes into the mixing pipe before the location of the DEF doser, and wherein the mixing chamber further comprises static turbine blades located around the DEF doser.

3. The mixing chamber of any of Claims 1-2, wherein the DEF doser is coupled to a portion of the first end mixing pipe that is indented toward the second end of the mixing pipe, wherein the diesel exhaust is inserted from the one or more insertion pipes into the mixing chamber at a portion of the first end of the mixing pipe that is not indented, and wherein the mixing chamber further comprises a DEF supply line that passes through the portion of the first end mixing pipe that is indented toward the second end of the mixing pipe, the DEF supply line configured to supply DEF to the DEF doser.

4. The mixing chamber of any of Claims 1-3, wherein the DEF doser is located in the mixing pipe at a position that is separated from an inner radial surface of the mixing pipe.

5. The mixing chamber of Claim 4, wherein the inner radial surface of the mixing pipe comprises a textured surface configured to create turbulent flow of the diesel exhaust at the inner radial surface of the mixing pipe to decrease a probability that atomized DEF impinges on the inner radial surface of the mixing pipe, and wherein the textured surface comprises a plurality of dimples.

6. The mixing chamber of any of Claims 1-5, wherein the mixer comprises a redox metal oxide catalyst coating that is active in performance of direct urea hydrolysis reaction.

7. The mixing chamber of any of Claims 1-6, wherein the mixer comprises one or more of a wiremesh mixer, a static mixer, or a tortuous path static mixer.

8. The mixing chamber of any of Claims 1-7, wherein the mixing pipe and the mixer have cylindrical shapes, wherein a cross sectional area of an entrance of the mixing pipe is between about 30% and about 75% smaller than a cylindrical shape of the cross sectional shape of a first portion of the mixing pipe , and wherein the entrance of the mixing pipe is restricted by a plurality of baffle plates configured to contribute to the angular moment of the diesel exhaust.

9. The mixing chamber of any of Claims 1-8, wherein the mixing pipe and the mixer have cylindrical shapes, and wherein a diameter of the cylindrical shape of the mixing pipe and a diameter of the cylindrical shape of the mixer are between about 10% and about 50% larger than a diameter of a cylindrical shape of a first portion of the mixing pipe.

10. The mixing chamber of any of Claims 1-9, wherein the one or more insertion pipes are configured to cause the diesel exhaust entering the mixing pipe to make a turn of about 135° or greater than 135° as the diesel exhaust is entering the mixing pipe.

11. The mixing chamber of any of Claims 1-10, wherein the one or more insertion pipes comprises a serpentine portion preceding a point at which the diesel exhaust is inserted from the one or more insertion pipes into the mixing pipe, wherein the axis of the one or more insertion pipes is an axis of the serpentine portion, and wherein an axis angle between the axis of the one or more insertion pipes and the longitudinal axis of the mixing pipe is less than one of 90° or 45°, wherein the one or more insertion pipes comprises a straight portion preceding the serpentine portion, wherein the straight portion of the one or more insertion pipes is substantially perpendicular to the mixing pipe, and wherein the axis of the one or more insertion pipes is an axis of the straight portion of the one or more insertion pipes.

12. The mixing chamber of any of Claims 1-11, wherein a back pressure of the diesel exhaust caused by the mixing chamber does not exceed 7 kPa, and wherein the mixer comprises a plurality of baffles of up to 30° angles arranged in a plurality of different directions.

13. The mixing chamber of any of Claims 1-12, wherein the mixer has a first end coupled to the second end of the mixing pipe and a second end opposite the first end of the mixer, wherein a distance between the first end of the mixing pipe and the second end of the mixer does not exceed 10 inches, wherein a distance between the first end of the mixing pipe and the second end of the mixing pipe does not exceed 8 inches, and wherein the one or more insertion pipes are located in a region bounded in part by a first plane and a second plane, the first plane being coplanar with the first end of the mixing pipe and the second plane being parallel to and not exceeding 2 inches away from the first plane.

14. A mixing chamber for treatment of diesel exhaust, comprising:
a mixing pipe configured to permit passage of diesel exhaust;
a baffle component located in the mixing pipe and comprising a plurality of baffles, wherein the plurality of baffles are configured to increase an angular momentum of the diesel exhaust passing through the mixing pipe;
a diesel exhaust fluid (DEF) doser configured to inject atomized DEF into the diesel exhaust flowing in the mixing pipe downstream of the baffle component; and
a mixer located in the mixing pipe downstream of the DEF doser, wherein the mixer is configured to convert the atomized DEF into gaseous ammonia and introduce the gaseous ammonia into the diesel exhaust.

15. The mixing chamber of Claim 14, wherein an angle of the plurality of baffles is selected based on an efficiency of mixing of the atomized DEF in the diesel exhaust, and wherein the angle of the plurality of baffles is less than or equal to about 30°, wherein a number of the plurality of baffles is selected based on an efficiency of mixing of the atomized DEF in the diesel exhaust, and wherein the number of the plurality of baffles is greater than or equal to eight and less than or equal to twenty six.
